# EUROPÄISCHE PATENTANMELDUNG

(11) **EP 2 599 378 A1**
(43) Veröffentlichungstag der Anmeldung: **05.06.2013**
(21) Anmeldenummer: 12195117.2
(22) Anmeldetag: 30.11.2012
(51) Int. Cl.: A01F 25/16

(54) **Aufrollsystem**

(30) Priorität: 02.12.2011 DE 202011108677 U
(71) Anmelder: AgroCom GmbH, 88410 Bad Wurzach (DE)
(72) Erfinder: Sattelberger, Werner, 88410 Bad Wurzach (DE)
(74) Vertreter: Pfister, Stefan Helmut Ulrich

(57) **Zusammenfassung**

Die Erfindung betrifft ein Aufrollsystem zum Aufrollen und Aufwickeln von Abdeckplanen, -vlies und -folien die zum Abdecken landwirtschaftlicher Produkte wie Biomaterial verwendet werden, wobei die Aufrollwelle biegeschlaff und insbesondere spiralförmig, als Spiralfeder, schraubenförmig, als ringsteifes Rohr, oder als gewelltes Rohr ausgebildet ist. Aufgabe ist es, mit geringerem Kraftaufwand die verschiedenen Layer auf- und abwickeln zu können.

## Beschreibung

Die Erfindung betrifft ein Aufrollsystem zum Aufrollen, Abrollen und Aufwickeln, Abwickeln von Abdeckplanen und Vliesbahnen wie sie für die Konservierung von Biomaterial (Silage) verwendet werden, nach dem Oberbegriff des Patentanspruches 1.

Die in der Land- und Agrarwirtschaft erzeugten Biomaterialen (Gräser, Mais und so weiter) werden nach der Ernte bis zur Verwendung in der Viehhaltung und/oder für den Einsatz im Biogasbetrieb in Silagen gelagert. Die Lagerstätten werden nach dem Einbringen sofort luftdicht verschlossen, um die Konservierung der Biomaterialien sicherzustellen und Verluste durch Schimmelbildung und Fäulnis zu vermeiden. Das luftdichte Verschließen verhindert des Weiteren ein Eindringen von Regenwasser. Als Verschluss werden so genannte Siloabdeck-Systeme verwendet, die üblicherweise aus übereinander liegenden Folien/Planen beziehungsweise Layer bestehen. Diese konservieren und schützen. Zur Sicherung (Wind, Sturm) wird die Oberfläche mit schweren Materialien wie Sandsäcken, alten Autoreifen oder ähnlichen beschwert.

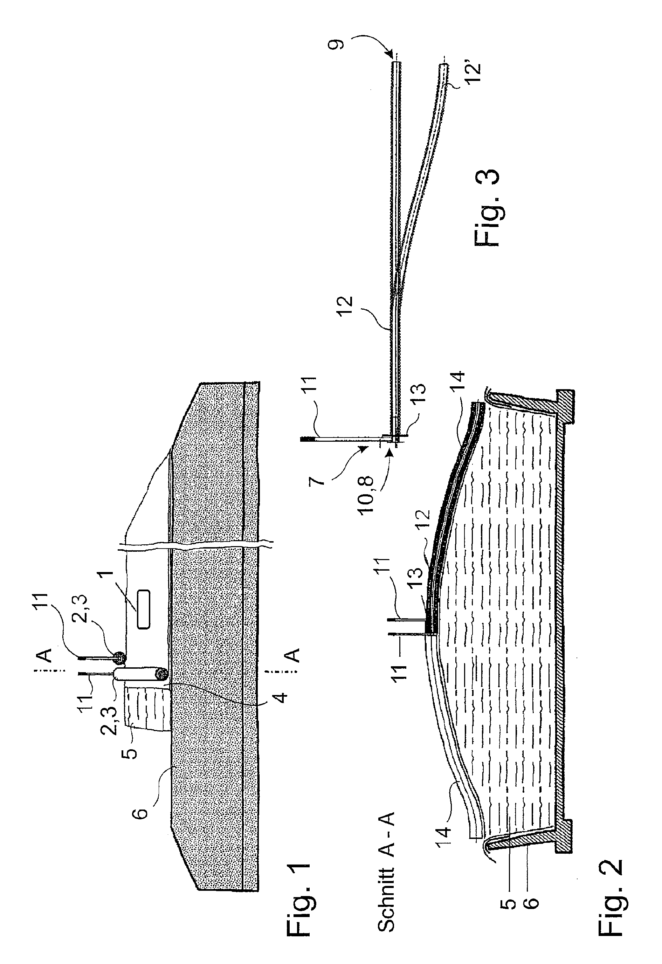

Das heute üblicherweise verwendete Abdeck-System weist folgenden Aufbau auf (siehe auch Fig.1):
1. Die oberste Schicht, sogenannter Layer4, stellt Beschwerungsmittel wie Sandsäcke oder Autoreifen dar.
2. Darunter liegt die oberste Schutzlage, sogenannter Layer3, die Abdeckplane
3. Darunter liegt eine weitere Schutzfolie, sogenannter Layer2, die Silofolie
4. Folie, sogenannter Layer1, die die Silage luftdicht abdeckt
5. Silage
6. Silowand

Der Begriff "Layer" ist als "Lage" zu verstehen, wobei es hierbei nicht darauf ankommt, dass diese Lage oder Layer durchgehend homogen ist, sondern ist insbesondere auch funktional zu verstehen, als sie die Lage der einzelnen Elemente zueinander definiert. Dies wird insbesondere dadurch klar, dass die oberste Schicht oder Lage beziehungsweise Layer 4 aus einzeln aufgelegten Beschwerungsmitteln wie Sandsäcken, Autoreifen und so weiter bestehen kann.

Die oben genannten Abdecksysteme kommen auch zur Anwendung bei Fahrsilos mit senkrechten Seitenwänden und Silagen auf Siloplatten ohne Seitenwände.

Zum Abdecken beziehungsweise Entnehmen der Silage muss beim "üblichen System" nach Entfernen der Beschwerungsmittel (Layer4) die Abdeckplane (Layer3) zurückgeschlagen und zur Wiederverwendung weggenommen werden. Beim "neuen" System mit nur 2 Layer betrifft dies (Zurückschlagen) die Vliesbahn (Layer2). Wegen der Größe der Layer ist das Abdecken und Wiederauflegen eher unhandlich und unpraktisch und mit hohem Kraftaufwand verbunden.

### Silofolie und Folie wird entsorgt. (1 mal Verwendung)

Ausgehend von diesem Stand der Technik ist es Aufgabe der vorliegenden Erfindung, eine Anordnung zu schaffen, die es ermöglicht mit geringerem Kraftaufwand zumindest eine der verschiedenen Layer oder Lagen zurückzuschlagen.

Zur Lösung dieser Aufgabe geht die Erfindung aus von einem Aufrollsystem zum Aufrollen und Aufwickeln von Abdeckplanen, Vliesen oder Folien, wobei das Aufrollsystem eine längsverlaufende Aufrollwelle aufweist, die biegeschlaff ausgebildet ist. Der Begriff "biegeschlaff" ist gegensätzlich auszulegen zu dem Begriff "biegesteif" und wird insbesondere durch den vorzugsweisen Einsatzzweck des erfindungsgemäßen Aufrollsystems deutlich. Dabei entspricht das hier vorgeschlagene Aufrollsystem einer Anordnung, wie sie in ähnlicher Weise auch zum Öffnen von zum Beispiel Fischkonserven bekannt ist.

Da die Silageoberfläche nicht eben ist sondern gewölbt, wäre die Verwendung eines starren Systems, zum Beispiel einer starren Welle, unpraktisch zu handhaben und mit großem Kraftaufwand verbunden. Es wird deshalb vorgeschlagen, statt eines starren Systems ein in sich biegsames System, ähnlich einer Spiralfeder oder ein ringsteifes Rohr zu verwenden. Diese sind in der Lage, sich einer gekrümmten Oberfläche besser anzupassen und bewirken ein gleichmäßigeres Aufrollen der Layer, was sich auf den Kraftaufwand positiv auswirkt. Die Betätigung der Aufrollvorrichtung kann manuell oder motorisch erfolgen.

Insbesondere zeichnet sich der erfindungsgemäße Vorschlag dadurch aus, dass mit der gleichen Anordnung auch die Silage wieder geschlossen werden kann, also die Layer beziehungsweise Lagen oder Folien wieder in ihre Endlage gebracht werden können. Durch das Aufrollkonzept wird auch erreicht, dass die zurückgeschlagenen Lagen beziehungsweise Layer in ihrer Parkposition möglichst wenig Platz beanspruchen, also auch nicht weiter stören. Der Begriff "Aufrollsystem" umfasst dabei implizit auch das Abrollsystem, das eine kinematische Umkehr mit den gleichen Elementen darstellt.

Ein neues Abdeck-System ist auf 2 Layer reduziert:
1. Oberste Abdeckplane, Vlies, sogenannter Layer2
2. Klettverschluss, verkettet die Vliesbahnen und macht die Abdeckung wind- und sturmsicher
3. Folie, sogenannter Layer1, die die Silage luftdicht abdeckt
4. Wandvlies
5. Silage
6. Silowand

Die Aufrollwelle ist also erfindungsgemäß biegeschlaff ausgebildet, das heißt die Aufrollwelle ist im Querschnitt rund, oval oder polygon, und insbesondere rohrförmig, wobei die Querschnittsform den bestimmungsgemäßen Belastungen stand hält, ohne sich wesentlich zu verformen. Was jedoch Biegemomente um die Längsachse der Aufrollwelle anbetrifft, so ist die Aufrollwelle eben nicht stabil, sondern um wesentliche Beträge nur auf Grund des Eigengewichtes der Aufrollwelle unelastisch und unplastisch wiederholt verformbar. Damit wird stets gewährleistet, dass die Aufrollwelle während des Aufwickel- oder Abwickelvorganges der Layer, sich möglichst genau an die immer unebene Oberfläche der Silage im Silo anpasst, wodurch ein problemloser Aufwickel- oder Abwickelvorgang erfolgen kann, ebenso wie eine optimale Auflage der Layer auf der Silage, ohne die Layer auf der Silage oder der Aufrollwelle nachpositionieren zu müssen. Zudem ist nahezu ausgeschlossen, dass sich die Aufrollwelle insbesondere bei vielen Wicklungen und damit hohem Beladegewicht plastisch verformt oder gar bricht. Weiterhin ist die Haft- und Gleitreibung der Layer auf der Silage durch eine höchst mögliche Kontaktfläche derartig erhöht, dass ein unerwünschtes Abrollen mit Verletzungsgefahr des Nutzers nahezu ausgeschlossen ist. Die maximale Biegeauslenkung der Aufrollwelle an deren Enden ist daher recht groß und liegt bei einer Gesamtlänge der Welle von circa 6 m bei bis zu 1 oder 2 m, also 10 - 35% maximale Auslenkung an den Enden bezogen auf die Gesamtlänge der Welle.

Um derartig große Biegeauslenkungen ohne bleibende Verformungen gewährleisten zu können, ist die Aufrollwelle eben biegeschlaff ausgebildet und insbesondere als ringsteifes gewelltes oder ungewelltes Rohr ausgebildet, wobei die Wellung im Querschnitt teilkreisförmig, oval, bogenförmig, polygonal geformt sein kann.

Alternativ kann die Aufrollwelle auch schraubenförmig oder im Querschnitt spiralförmig oder sogar als Spiralfeder ausgebildet sein, so dass damit im Vergleich zum Vollzylinder Material und damit Gewicht eingespart werden kann, welches beim Auf- und Abwickeln nicht bewegt werden muss.

Besonders bevorzugt wird, dass die Aufrollwelle als Kunststoff-Verbundrohr insbesondere aus Polyethylen mit gewelltem Außenrohr ausgebildet ist. Dieses Kunststoff-Verbundrohr ist extrem stabil und daher sehr lange haltbar, auch bei hohen Biege- und Torsionsmomenten.

Um nun hohe Biege- und Torsionskräfte auf die rohrförmige Aufrollwelle aufbringen zu können, ist diese einseitig oder beidseitig mit einem stirnseitigen Flansch für die Ankoppelung einer Dreheinrichtung ausgebildet, wobei als Dreheinrichtung eine über einen Hebel manuell betätigbare Einfach- oder Doppelratsche vorgesehen sein kann, aber auch ein Elektromotor mit Elektro-Akkumulator, oder gar ein Verbrennungsmotor.

Falls ein Motor als Dreheinrichtung vorgesehen wird, wird bevorzugt, dass dieser Motor über eine Abtriebswelle mit einem untersetzenden Getriebe, insbesondere Schneckengetriebe über den Flansch mit der Aufrollwelle drehfest verbunden ist. Damit kann eine relativ hohe Drehzahl und damit geringes Drehmoment des Motors zu einer relativ geringen Drehzahl der Aufrollwelle und der darauf sich auf- oder abwickelnden Layer führen. Insbesondere kann dann eine handelsübliche Akku-Schraub-Maschine oder Akku-Bohr-Schraub-Maschine als Motor für die Aufrollwelle eingesetzt werden, so dass die Kosten für den Motor sehr gering gehalten werden können.

Der Flansch der Dreheinrichtung wird als insbesondere metallischer Zylinderrohrstutzen ausgebildet, kann aber auch aus anderen Materialien wie zum Beispiel Holz oder Kunststoff geformt sein. Wichtig ist aber immer, dass der Außendurchmesser des Flansches der Dreheinrichtung gleich oder etwas kleiner als der Innendurchmesser der rohrförmigen Aufrollwelle ist.

In einer besonders bevorzugten Ausführungsform der Erfindung weist der Rohrstutzen des Flansches mindestens einen, bevorzugt zwei, oder auch mehrere axial sich erstreckende Längsschlitze auf, welche sich im Wesentlichen über die gesamte axiale Länge des Rohrstutzens erstrecken, mit Ausnahme der stirnseitigen Deckplatte, auf welchen der Motor Drehmoment übertragend aufgesetzt wird. Hiermit kann dafür gesorgt werden, dass daraus eine möglichst satte kraftschlüssige Anlage des Außenmantels des Rohrstutzen des Flansches auf dem Innenmantel der rohrförmigen Aufrollwelle resultiert, so dass damit die Übertagung des Drehmoments des Motors nicht nur über die radialen Befestigungselemente zwischen Rohrstutzen des Flansches und rohrförmiger Aufrollwelle erfolgt, sondern zusätzlich über Kraftschluss zwischen diesen beiden Kontaktflächen. Damit wird ein unzulässig hohes Torsionsmoment vermieden, das ein Abscheren der Befestigungselemente zwischen Rohrstutzen des Flansches und rohrförmiger Aufrollwelle zur Folge hätte. Entsprechend der zu wählenden Leistung des Motors auf Grund der Layerlänge und - breite, sowie dem spezifischen Gewicht der Layer, wird die Anzahl und Anordnung der Befestigungselemente und die Länge des Rohrstutzen des Flansches gewählt. Durch die elastisch federnde Aufspreizung des Rohrstutzen des Flansches nach radial außen wird auch für eine Verliersicherung der Befestigungselemente (zum Beispiel selbstschneidende Schrauben) gesorgt.

In einer vorteilhaften Weiterbildung der Erfindung ist die rohrförmige Aufrollwelle in ihrem Innern mit einer Vielzahl von zueinander beabstandeten Vollzylindern insbesondere aus Holz versehen. Der Außendurchmesser der Vollzylinder ist gleich oder etwas kleiner als der Innendurchmesser der rohrförmigen Aufrollwelle. Hierdurch kann das Anfangsstück der Layer mittels Befestigungselementen (zum Beispiel selbstschneidende Schrauben), die durch das Material der Layer und der rohrförmigen Aufrollwelle in das Material der Vollzylinder eingebracht werden, gesichert werden.

In der Zeichnung ist die Erfindung insbesondere in einem Ausführungsbeispiel schematisch dargestellt. Es zeigen:
- Figur 1:: Längsansicht quer zur Rollrichtung und Fahrrichtung eines Silos mit erfindungsgemäßem Aufrollsystem.
- Figur 2:: Vorder- oder Rückansicht im Querschnitt in Rollrichtung und Fahrrichtung des Silos mit erfindungsgemäßem Aufrollsystem gemäß Figur 1.
- Figur 3:: Vergrößerte Detaildarstellung des erfindungsgemäßen Aufrollsystems gemäß Figur 2.
- Figur 4:: Weiter vergrößerte Detaildarstellung im Längsschnitt des erfindungsgemäßen Aufrollsystems gemäß Figur 3, mit Elektromotorantrieb.

In den Figuren sind gleiche oder einander entsprechende Elemente jeweils mit den gleichen Bezugszeichen bezeichnet und werden daher, sofern nicht zweckmäßig, nicht erneut beschrieben.

Die in Fig. 1, 2 verwendeten Bezugszeichen bedeuten:
1: Die oberste Schicht, sog. Layer4, stellt Beschwerungsmittel wie Sandsäcke oder Autoreifen dar.
2: Darunter liegt die oberste Schutzlage, sogenannter Layer3, die Abdeckplane
3: Darunter liegt eine weitere Schutzfolie, sogenannter Layer2, die Silofolie
4: Folie, sogenannter Layer1, die die Silage luftdicht abdeckt
5: Silage
6: Silowand
11: Hebelvorrichtung zum manuellen Aufrollen
12: Aufrollwelle
13: Flansch (für Hebel- oder motorische Dreheinrichtung)
14: Abdeckplane oder Vliesbahn

Hebelvorrichtung 11, zum Beispiel dient eine Ratsche 8 mit Hebel 11 zum Drehen und Aufrollen.

Aufrollwelle 12, zum Beispiel ein Verbundrohr mit gewelltem Außenrohr, das sich der gekrümmten Oberfläche anpasst.

Flansch 13, zum Beispiel um die Kraft von Ratsche 8 oder Motor 15 auf die Aufrollwelle zu übertragen. Darüber hinaus kann Ratsche 8 oder Motor 15 schnell abgekoppelt werden.

Um den Kraftaufwand weiter zu minimieren, ist es möglich, die Layer 14 mittig zu teilen und je ein Aufrollsystem pro Abdeckplane links 9 und rechts 10 zu verwenden.

In Figur 3 ist eine vergrößerte Detaildarstellung des erfindungsgemäßen Aufrollsystems der Figuren 1 und 2 gezeigt, wobei mit Bezugsziffer 12 die unverformte Aufrollwelle als gerades Zylinderrohr gezeichnet ist, und mit Bezugsziffer 12' die auf Grund des Eigengewichtes auf der Silage 5 (nicht gezeigt) liegende verformte biegeschlaffe Aufrollwelle als bogenformig verlaufendes Zylinderrohr gezeichnet ist. Am linken stirnseitigen Ende der Aufrollwelle 12 ist der Flansch 13 zur Kopplung mit der Dreheinrichtung 7 abgebildet, welcher mit der Aufrollwelle 12 über Befestigungselemente 13c, 13d drehfest gekoppelt ist.

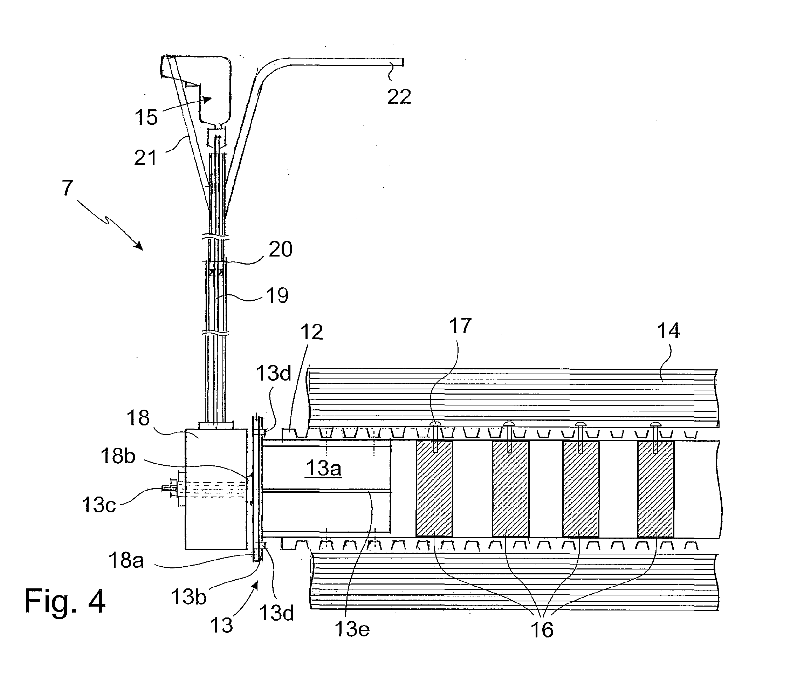

Mit Figur 4 sind vergrößerte Details der Verbindung zwischen Motor 15 und Aufrollwelle 12 über den Flansch 13 besser zeichnerisch dargestellt.

Die Montage der fertigen Aufrollwelle 12 verläuft folgenderma-βen:

Zunächst wird in eine der Stirnseiten der Aufrollwelle 12 das Zylinderrohr 13a des Flansches 13 eingeschoben, bis dieser mit seinem Bund 13b an der Stirnseite der Aufrollwelle 12 zur Anlage kommt. Danach werden von radial außen Befestigungsschrauben durch die Mantelteile der rohrförmigen Aufrollwelle 12 hindurch in das Zylinderrohr 13a des Flansches 13 eingeschraubt, so dass sich die Mantelteile der rohrförmigen Aufrollwelle 12 nach radial außen hin aufspreizen und damit der axiale Längsschlitz 13e verbreitert. Danach werden in den Innenraum der rohrförmigen Aufrollwelle 12 mehrere Holzzylinder 16 voneinander beabstandet eingeschoben. Diese Reihenfolge kann natürlich auch umgedreht werden.

Das andere Rohrende oder Stirnseite kann in verschiedener Weise ausgestaltet werden. Zunächst ist es möglich, dass die andere Stirnseite unverschlossen bleibt, was unkritisch ist, da die verwendeten Materialien ausreichend beständig sind. Die andere Stirnseite kann zum Beispiel aber auch nur durch eine Abdeckplatte (oder Holzstück) verschlossen werden, die mit radial eingeschraubten Befestigungsschrauben fixiert wird.

Bei einer weiteren Variante wird auf die andere der Stirnseiten der Aufrollwelle 12 das Zylinderrohr 13a des Flansches 13 analog eingeschoben und mit der Aufrollwelle 12 befestigt. Danach werden Schrauben 17 von radial außerhalb durch das Layermaterial 14 hindurch, sowie durch das Mantelmaterial der Aufrollwelle 12 hindurch, in das Material des Holzzylinders 16 eingeschraubt, womit der Anfang des Layers 14 mit der Aufrollwelle 12 drehfest verbunden ist. Diese Reihenfolge kann auch natürlich umgedreht werden.

Der Vorzug der beidseitigen Anordnung des Flansches 13 an der Aufrollwelle 12 liegt darin, dass eine wahlweise Anordnung der Dreheinrichtung 7 an dem einem oder anderen Ende möglich ist. Dadurch können zum Beispiel bauliche Gegebenheiten wie zum Beispiel enge Zugangsmöglichkeiten und so weiter umgangen werden. Insbesondere sind aber auch sehr lange Aufrollwellen mit dem beidseitigen Antrieb leichter und zuverlässiger zu bewegen, wobei es dabei nicht auf einen exakten synchronen Antrieb der beiden angeordneten Dreheinrichtungen 7 ankommt, da sowohl die Aufrollwelle 12, wie auch das aufgewickelte Gut eine ausreichende Flexibilität gegen Torsionskräfte aufweist. Eine solche Anordnung kann zum Beispiel auch in langen Aufrollwellen (Länge mehr als 6 m, 8 m, 10 m oder 12 m) verwendet werden.

Alternativ, wenn auch etwas umständlicher, kann zuerst die Montage des Anfangs des Layers 14 auf der Aufrollwelle 12 erfolgen und erst danach die Montage der beiden Flansche 13 an den beiden Stirnseiten der Aufrollwelle 12.

Nun liegt eine fertig montierte Aufrollwelle 12 mit beidseitigen Flanschen 13 vor, an deren Bunde 13b die Dreheinrichtung 7 wiederholt lösbar angekoppelt werden kann.

Die Kopplung zwischen Dreheinrichtung 7 und Flansch 13 erfolgt zum einen über eine Gewindestange 13c, welche sich konzentrisch am Bund 13b des Flansches 13 befindet und sich von dort aus nach axial außen hin erstreckt und mit einer Flügelmutter gesichert werden kann. Zum anderen erfolgt die Kopplung zwischen Dreheinrichtung 7 und Flansch 13 über eine Zapfen-Bohrungs-Verbindung 13d zwischen dem Abtriebsflansch 18a des Untersetzungsgetriebes 18 (zum Beispiel Schneckengetriebe) und dem Bund 13b des Flansches 13. Der Abtriebsflansch 18a des Untersetzungsgetriebes 18 ist dabei drehfest mit der Abtriebswelle 18b des Untersetzungsgetriebes 18 verbunden, welches wiederum drehfest mit der Abtriebswelle 19 des Motors 15 für dessen Drehmomentübertragung verbunden ist.

Die Motorabtriebswelle 19 ist dabei innerhalb eines Gehäuserohres 20 geschützt gelagert und kann zweifach oder mehrfach teleskopierbar und verrastbar ausgebildet sein.

Eine Drehmomentstütze 21 zwischen Gehäuse 20 der Motorabtriebswelle 19 und Gehäuse des Motors 15 verhindert dessen unerwünschtes Drehen um die dann still stehende Motorabtriebswelle 19, da das Gehäuse 20 fest auf dem Gehäuse des Getriebes 18 festgelegt ist. Ein Handgriff 22 ist ebenfalls mit dem Gehäuse 20 der Motorabtriebswelle 19 fest verbunden, damit die gesamte Dreheinrichtung 7 durch den Nutzer in ergonomischer Position gehalten werden kann.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Aufrollsystem zum Aufrollen und Aufwickeln von Abdeckplanen, -vlies und -folien (2 - 4) die zum Abdecken landwirtschaftlicher Produkte wie Biomaterial (5) verwendet werden, **dadurch gekennzeichnet, dass** die Aufrollwelle (12) biegeschlaff ausgebildet ist.

2. Aufrollsystem nach Anspruch 1, **dadurch gekennzeichnet, dass** die Aufrollwelle (12) spiralförmig, als Spiralfeder, schraubenförmig, als ringsteifes Rohr, oder als gewelltes Rohr ausgebildet ist.

3. Aufrollsystem nach einem der vorhergehenden Ansprüche, **dadurch gekennzeichnet, dass** die Aufrollwelle (12) als Verbundrohr mit gewelltem Aussenrohr ausgebildet ist.

4. Aufrollsystem nach einem der vorhergehenden Ansprüche, **dadurch gekennzeichnet, dass** die Aufrollwelle (12) mit Flansch (13) für Dreheinrichtung (7) ausgebildet ist.

5. Aufrollsystem nach einem der vorhergehenden Ansprüche, **dadurch gekennzeichnet, dass** die Aufrollwelle (12) mit Hebel (11) manuell betätigt wird.

6. Aufrollsystem nach einem der vorhergehenden Ansprüche, **dadurch gekennzeichnet, dass** die Aufrollwelle (12) mit Einfach- oder Doppelratsche (8) manuell betätigt wird.

7. Aufrollsystem nach einem der vorhergehenden Ansprüche, **dadurch gekennzeichnet, dass** die Aufrollwelle (12) motorisch mittels Motor (15) betätigt wird.

8. Aufrollsystem nach einem der vorhergehenden Ansprüche, **dadurch gekennzeichnet, dass** das Aufrollsystem mehrteilig, links (9) und rechts (10) angreifend ausgeführt wird.

9. Aufrollsystem nach einem der vorhergehenden Ansprüche, **dadurch gekennzeichnet, dass** der Motor (15) ein Elektromotor und/oder Verbrennungsmotor ist.

10. Aufrollsystem nach einem der vorhergehenden Ansprüche, **dadurch gekennzeichnet, dass** der Elektromotor (15) durch einen Elektro-Akkumulator betrieben ist.

11. Aufrollsystem nach einem der vorhergehenden Ansprüche, **dadurch gekennzeichnet, dass** der Elektromotor (15) durch einen Elektro-Akkumulator betrieben ist und insbesondere eine handelsübliche Akku-Schraub-Maschine oder Akku-Bohr-Schraub-Maschine ist.

12. Aufrollsystem nach einem der vorhergehenden Ansprüche, **dadurch gekennzeichnet, dass** der Motor (15) über eine Abtriebswelle (19) mit einem untersetzenden Getriebe (18), insbesondere Schneckengetriebe über den Flansch (13) mit der Aufrollwelle (12) drehfest verbunden ist.

13. Aufrollsystem nach einem der vorhergehenden Ansprüche, **dadurch gekennzeichnet, dass** die Aufrollwelle (12) aus Polyethylen (PE) besteht oder dieses überwiegend enthält.

14. Aufrollsystem nach einem der vorhergehenden Ansprüche, **dadurch gekennzeichnet, dass** der Flansch (13) als insbesondere metallischer Zylinderrohrstutzen (13a) ausgebildet ist, mit einem Aussendurchmesser gleich oder etwas kleiner als der Innendurchmesser der rohrförmigen Aufrollwelle (12) und dass der Zylingerrohrstutzen (13a) des Flansches (13) mindestens einen axial sich erstreckenden Längsschlitz (13e) aufweist.

15. Aufrollsystem nach einem der vorhergehenden Ansprüche, **dadurch gekennzeichnet, dass** die rohrförmige Aufrollwelle (12) in ihrem Innern eine Vielzahl von zueinander beabstandeten Zylindern (16) insbesondere aus Vollholz aufnimmt, mit einem Aussendurchmesser gleich oder etwas kleiner als der Innendurchmesser der rohrförmigen Aufrollwelle (12) und dass das Anfangsstück der Layer (14) mittels Befestigungselementen (17), die durch das Material der Layer (14) und der rohrförmigen Aufrollwelle (12) in das Material der Zylinder (16) eingebracht sind, gesichert werden.
